# EUROPEAN PATENT APPLICATION

(11) **EP 3 309 595 A1**
(43) Date of publication of application: **18.04.2018**
(21) Application number: 17193299.9
(22) Date of filing: 26.09.2017
(51) Int. Cl.: G02B 7/182

(54) **SUPPORT FOR OPTICAL ELEMENT AND IMAGE DRAWING APPARATUS**

(30) Priority: 13.10.2016 JP 2016201395
(71) Applicant: Hitachi-LG Data Storage, Inc., Tokyo 108-0022 (JP)
(72) Inventor: OCHI, Manabu, Chiyoda-ku, Tokyo 100-8280 (JP); YAMASAKI, Tatsuya, Minato-ku, Tokyo 108-0022 (JP); KAZAMA, Atsushi, Chiyoda-ku, Tokyo 100-8280 (JP); ICHIKAWA, Fumihito, Minato-ku, Tokyo 108-0022 (JP)
(74) Representative: Moore, Graeme Patrick

(57) **Abstract**

A support structure for an optical element in which a variation in mounting posture is suppressed irrespective of an error in external dimensions of the optical element is provided, and an image drawing apparatus with less color irregularity is provided.

[Solving Means] A housing formed with a first holding surface contact-holding a first surface of an optical element and a second holding surface contact-holding at least a portion of a ridge line separated from the first surface of the optical element, a first pressing member which presses the optical element toward the first holding surface, and a second pressing member which presses the optical element toward the second holding surface are provided, wherein an intersection angle of extrapolation surfaces obtained by extrapolating and extending the first and second holding surfaces is an acute angle, and wherein a first pressing position at which the first pressing member exerts a pressing force on the optical element is closer to the second holding surface than to a center of the optical element, and a second pressing position at which the second pressing member exerts a pressing force on the optical element is a position farther separated from the first holding surface than from the center of the optical element.

## Description

### TECHNICAL FIELD

The present invention relates to a support for an optical element and an image drawing apparatus, and particularly, to a support for an optical element and an image drawing apparatus suitable for supporting when the optical element such as a prism or a mirror is provided.

### BACKGROUND ART

In the related art, optical elements are often used to optically reflect and refract light from a laser light source or the like. For example, in an image drawing apparatus as an example, in order to allow optical axes of laser beams of three colors of green, red and blue emitted from laser light source units to be aligned to be substantially the same, a wavelength-selective dichroic mirror is provided. A variation in mounting posture of an optical element such as a dichroic mirror causes color irregularity on the screen, for example, in the image drawing apparatus, and thus, mounting without an error is required.

In order to solve such a problem, as an example of a support structure for mounting an optical element with high accuracy, there is known a technique of pressing two surfaces of a predetermined surface of the optical element and a surface adjacent to the surface with respective fixed springs and abutting back surface sides corresponding to the two surfaces against the respective seating surfaces provided on a housing. Such a technique is disclosed in, for example, JP 2016-126269 A.

### CITATION LIST

### PATENT DOCUMENT

Patent Document 1: JP 2016-126269 A

### SUMMARY OF THE INVENTION

### PROBLEMS TO BE SOLVED BY THE INVENTION

As in the related art described above, in the support structure in which the two surfaces of the optical element are mounted to be in contact with a seating surface, if there is an error in external dimensions, the contact position between the optical element and the seating surface is not constant, and a rotational moment is generated in the optical element due to the pressing force by the spring and the reaction force received from the seating surface, so that there is a possibility that the optical element is mounted with a gap from the seating surface. For example, in the case where there is a positive rectangle error, a ridge line on a side different from the seating surface side of the optical element is more likely to be mounted with a gap from the surface. Conversely, in the case where there is a negative rectangle error, a ridge line on the seating surface side of the optical element is more likely to be mounted with a gap from the surface.

The invention is to provide a support for an optical element and an image drawing apparatus capable of suppressing a variation in mounting posture irrespective of an error in external dimensions of the optical element.

### SOLUTION TO PROBLEMS

According to an aspect of the invention, a housing is provided, wherein a first holding surface contact-holding a first surface which is a predetermined surface of the optical element and a second holding surface contact-holding at least a portion of a ridge line of the second surface adjacent to the first surface of the optical element are formed in a portion of the housing, and the ridge line is separated from the first surface, wherein a first pressing member which presses the optical element toward the first holding surface and a second pressing member which presses the optical element toward the second holding surface are provided, and wherein an intersection angle between extensions of the first holding surface and the second holding surface is smaller than an angle between the first surface and the second surface.

In addition, according to an aspect of the invention, a housing formed with a first holding surface contact-holding a first surface of an optical element and a second holding surface contact-holding at least a portion of a ridge line separated from the first surface of the optical element, a first pressing member which presses the optical element toward the first holding surface, and a second pressing member which presses the optical element toward the second holding surface are provided, wherein an intersection angle of extrapolation surfaces obtained by extrapolating and extending the first and second holding surfaces is an acute angle, and wherein a first pressing position at which the first pressing member exerts a pressing force on the optical element is closer to the second holding surface than to a center of the optical element, and a second pressing position at which the second pressing member exerts a pressing force on the optical element is a position farther separated from the first holding surface than from the center of the optical element.

### EFFECTS OF THE INVENTION

According to the invention, it is possible to provide a support for an optical element in which variation in mounting posture is suppressed irrespective of an error in external dimensions of the optical element. Furthermore, in an image drawing apparatus to which the invention is applied, since optical axes of laser beams of three colors can be aligned to be substantially the same, it is possible to display an image with less color irregularity.

### BRIEF DESCRIPTION OF THE DRAWINGS

Fig. 1 is a plan diagram schematically illustrating a configuration of an image drawing apparatus according to a first embodiment.
Fig. 2 is a partially exploded perspective diagram illustrating a configuration of a support structure of a dichroic mirror according to the first embodiment.
Fig. 3 is a partial cross-sectional diagram illustrating a support structure of a dichroic mirror according to the first embodiment.
Fig. 4 is a partial cross-sectional diagram illustrating a shape of a holding surface provided in the housing according to the first embodiment.
Fig. 5 is a partial cross-sectional diagram illustrating a pressing position of the dichroic mirror according to the first embodiment.
Fig. 6 is a partially exploded perspective diagram illustrating a configuration of a support structure of a dichroic mirror according to a second embodiment.
Fig. 7 is a partial plan diagram illustrating the positional relationship of the holding surfaces of the housing according to the second embodiment.
Fig. 8 is a partial cross-sectional diagram illustrating a positional relationship between a dichroic mirror and a corner portion of a holding surface according to the second embodiment.
Fig. 9 is a partial plan diagram illustrating a pressing position of a dichroic mirror according to the second embodiment.

### MODE FOR CARRYING OUT THE INVENTION

A first embodiment will be described as an example of an image drawing apparatus to which a support structure of an optical element according to the invention is applied.

### [First Embodiment]

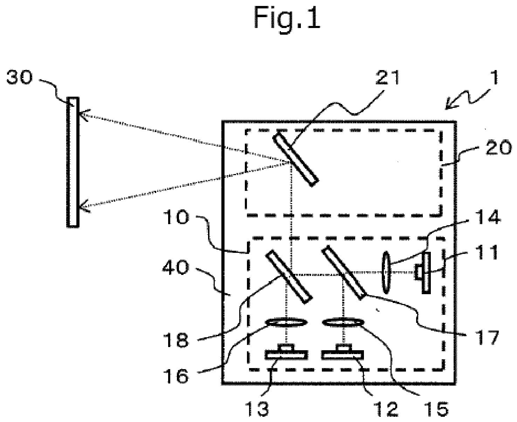

Fig. 1 is a schematic plan diagram illustrating a configuration of an image drawing apparatus 1 to which a support structure of an optical element according to a first embodiment is applied. Dotted lines in the figure represent optical axes of laser beams. The image drawing apparatus 1 according to the first embodiment is configured to include a laser light source unit 10 that emits a laser beam for image drawing and a deflecting mirror device 20 that deflects and scans the laser beam in two dimensions as main optical components. A housing 40 is a molded product that supports and fixes the laser light source unit 10 and the deflecting mirror device 20.

First, a configuration of the laser light source unit 10 will be described. In the laser light source unit 10, three laser light sources 11, 12 and 13 having different wavelengths are arranged.

The laser light source 11 is, for example, a laser diode that emits a green laser beam. The green laser beam emitted from the laser light source 11 passes through a collimator lens 14, is converted into a substantially parallel laser beam, and is incident on a dichroic mirror 17.

The laser light source 12 is, for example, a laser diode that emits a blue laser beam. The blue laser beam emitted from the laser light source 12 also passes through a collimator lens 15, is converted into a substantially parallel laser beam, and is incident on the dichroic mirror 17.

The dichroic mirror 17 is a wavelength-selective optical element having a function of transmitting the green laser beam emitted from the laser light source 11 and reflecting the blue laser beam emitted from the laser light source 12, and the laser beams of two colors transmitted and reflected by the dichroic mirror 17 travel on substantially the same optical path in which the angles and positions of the respective optical axes are aligned and are incident on the dichroic mirror 18.

The laser light source 13 is, for example, a laser diode that emits a red laser beam. The red laser beam emitted from the laser light source 13 passes through a collimator lens 16, is converted into substantially parallel laser beam, and is incident on the dichroic mirror 18.

The dichroic mirror 18 is a wavelength-selective optical element having a function of reflecting green and blue laser beam and transmitting only red laser beam. The laser beams of three colors of green, blue, and red transmitted or reflected by the dichroic mirror 18 travel as substantially the same laser beam having the aligned angles and positions of the respective optical axes and are incident on a deflecting mirror device 20.

Next, the deflecting mirror device 20 will be described. The deflecting mirror device 20 has a reflecting mirror 21 inside the device and has a function of vibrating a reflecting surface around two axes. The deflecting mirror device 20 reflects the incident laser beam and scans in two directions on a screen 30 that is separated by a predetermined distance to draw an image.

The support structure according to the invention is applied to fix the dichroic mirrors 17 and 18 arranged in the optical path of the image drawing apparatus 1. In the following, a specific support structure and effects thereof will be described with the dichroic mirror 18 as an example.

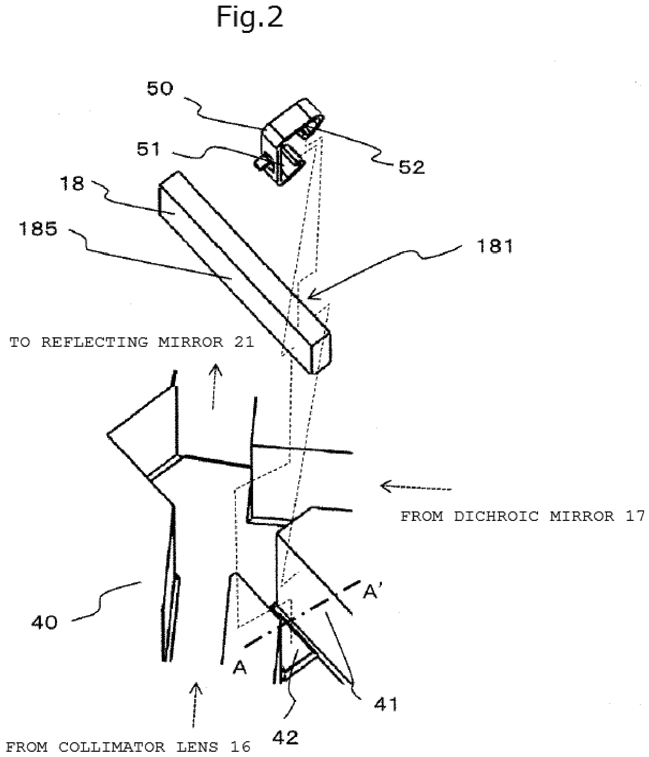

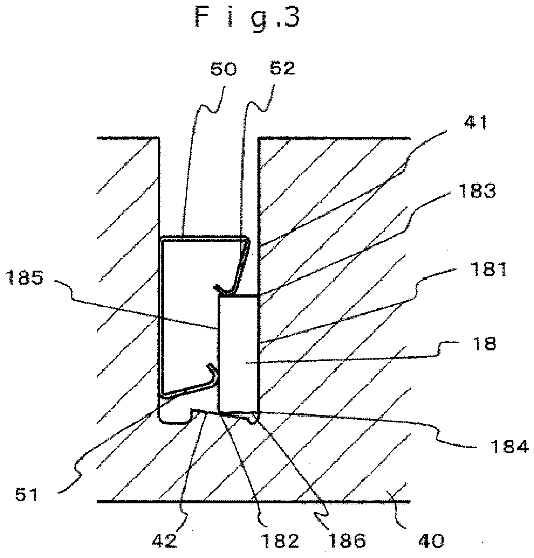

Fig. 2 is a partially exploded perspective diagram illustrating a configuration of the support structure of the dichroic mirror 18 according to the first embodiment, and Fig. 3 is a cross-sectional diagram taken along line A-A' of Fig. 2 illustrating the support structure of the dichroic mirror 18 according to the first embodiment. In the figure, reference numeral 182 is a ridge line separated from the reflecting surface 181 of the dichroic mirror 18 and is a ridge line of the second holding surface 42 side on a back surface 185 opposing to the reflecting surface 181. Herein, the ridge line denotes a line segment formed by intersection of two adjacent surfaces. Specifically, the ridge line 182 is a line segment formed by intersection of the second surface 186 of the dichroic mirror and the back surface 185 opposing to the reflecting surface. Reference numerals 183 and 184 are ridge lines of the second pressing portion 52 side and the second holding surface 42 side on the reflecting surface 181, respectively.

The housing 40 has a first holding surface 41 contact-holding the reflecting surface 181 which is the first surface of the dichroic mirror 18 and a second holding surface 42 for holding a portion of the ridge line 182 separated from the reflecting surface 181 of the dichroic mirror 18. A pressing member 50 is inserted between the back surface 185 opposing to the reflecting surface 181 of the dichroic mirror 18 and the housing 40. The pressing member 50 has a first pressing portion 51 for pressing the dichroic mirror 18 toward the first holding surface 41 and a second pressing portion 52 for pressing the dichroic mirror 18 toward the second holding surface 42. Thus, in the dichroic mirror 18 according to the first embodiment, the position and posture thereof are regulated by pressing the reflecting surface 181 against the first holding surface 41 of the housing 40 and pressing the ridge line 182 against the second holding surface 42, respectively. In addition, in the embodiment, the first pressing portion 51 and the second pressing portion 52 are integrally formed on one pressing member 50, but the first pressing portion 51 and the second pressing portion 52 may be formed on separate pressing members. In addition, the angle tolerance between the reflecting surface 181 of the dichroic mirror and the back surface 185 thereof is formed with extremely high accuracy. Therefore, in the embodiment, the reflecting surface 181 as the first surface of the dichroic mirror 18 is configured to be pressed against the first holding surface 41 of the housing 40, but the back surface 185 may be configured to be pressed against the first holding surface 41.

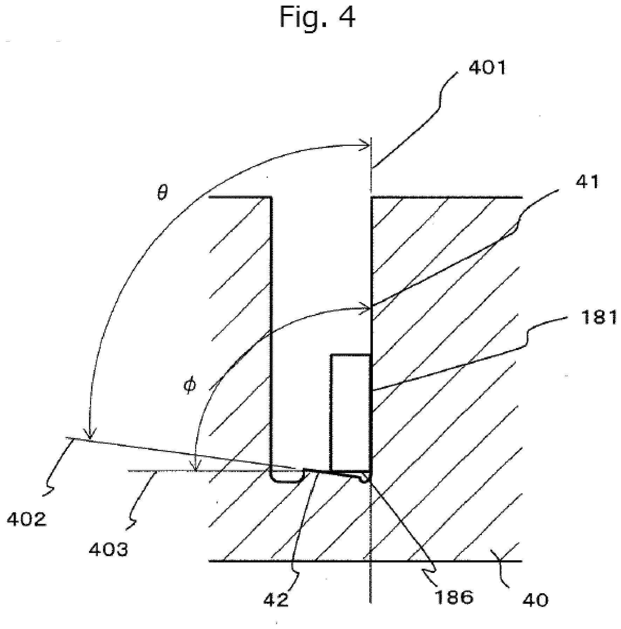

The configuration of the embodiment has two features. The first feature will be described with reference to Fig. 4. Fig. 4 is a partial cross-sectional diagram illustrating a shape of the first holding surface 41 and the second holding surface 42 of the housing 40 according to the first embodiment. The second holding surface 42 is an inclined surface that descends toward the first holding surface 41, and the inclination thereof has a height difference larger than the rectangle tolerance of the dichroic mirror 18. When the first holding surface 41 and the second holding surface 42 are extrapolated and extended, respectively, the intersection angle θ of the extrapolation surfaces (extrapolation planes 401 and 402) becomes an acute angle, the contact position between the dichroic mirror 18 and the second holding surface 42 can be regulated to be constantly maintained on the ridge line 182 of the back surface 185 side irrespective of the rectangle error between the two surfaces of the reflecting surface 181 of the dichroic mirror and the second surface 186 adjacent to the reflecting surface and facing the second holding surface 42. In this case, in the dichroic mirror 18, the ridge line 184 of the second holding surface 42 side of the reflecting surface 181 may be separated from the first holding surface 41 by a rotational moment generated by a reaction force received from the second holding surface 42, but the ridge line 183 of the second pressing portion 52 side of the reflecting surface 181 is not separated from the first holding surface 41. In addition, in the embodiment, the ideal angle between the two surfaces of the reflecting surface 181 and the second surface 186 of the dichroic mirror 18 is configured to be a rectangle (extrapolation surfaces 401 and 403), but in the case where the ideal angle between the two surfaces is an angle φ other than a rectangle, even if the intersection angle θ of the extrapolation surfaces when the first holding surface 41 and the second holding surface 42 are extrapolated and extended is set to be smaller than a minimum allowable value of the angle φ, the same effect can be obtained. Herein, the minimum allowable value denotes the minimum allowable dimension or denotes a reference dimension as a lower limit value of the dimension + a tolerance difference of a lower dimension. Even if the intersection angle θ of the extrapolation surfaces is simply set to be smaller than the minimum allowable value of the angle φ, almost the same effect can be obtained.

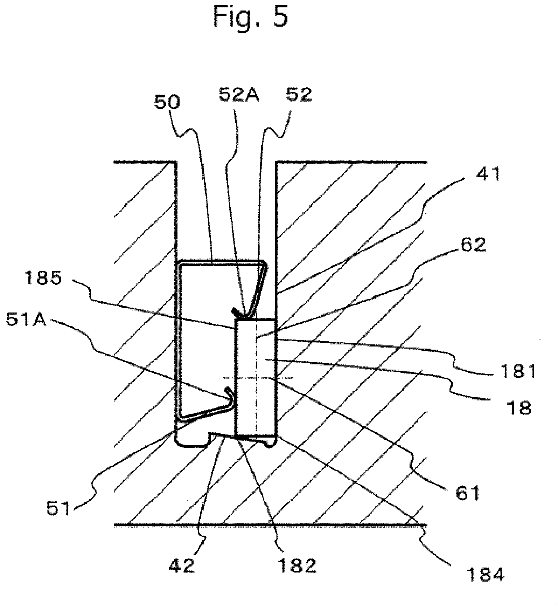

The second feature will be described with reference to Fig. 5. Fig. 5 is a partial cross-sectional diagram illustrating a pressing position of the dichroic mirror 18 according to the first embodiment. In the figure, a one-dot dashed line 61 represents the center line of the dichroic mirror 18 parallel to the normal line of the reflecting surface 181, and a one-dot dashed line 62 represents the center line of the dichroic mirror 18 on the central plane between the reflecting surface 181 and the back surface 185. A first pressing position 51A at which the first pressing portion 51 of the pressing member 50 exerts a pressing force on the dichroic mirror 18 is closer to the second holding surface 42 than the center line 61, and a second pressing position 52A at which the second pressing portion 52 exerts a pressing force on the dichroic mirror 18 is closer to the back surface 185 than the center line 62 of the dichroic mirror 18. In this case, the rotational moment generated by the above-mentioned reaction force received from the second holding surface 42 is canceled out by the rotational moment generated by the two pressing forces exerted on the dichroic mirror 18, and thus, the separation of the ridge line 184 of the dichroic mirror from the first holding surface 41 is suppressed. As a result, it is possible to mount the dichroic mirror 18 to the housing 40 in the state where the reflecting surface 181 is in surface contact with the first holding surface 41 at all times irrespective of an error in outer dimensions of the dichroic mirror 18.

Therefore, it is possible to provide a support structure for an optical element in which a variation in mounting posture is suppressed irrespective of an error in external dimensions of the optical element. Furthermore, in the image drawing apparatus to which the invention is applied, since the optical axes of the laser beams of three colors can be aligned to be substantially the same, it is possible to display an image with less color irregularity.

### [Second Embodiment]

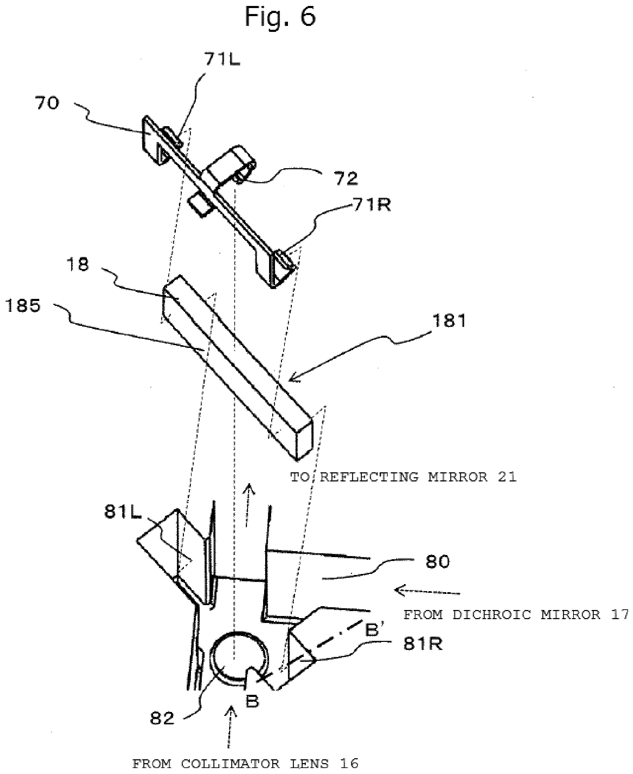

A second embodiment of the invention will be described with reference to Figs. 6 to 9. The components having the same functions as those of the above-described components denoted by the same reference numerals in the figures are omitted in description.

Fig. 6 is a partially exploded perspective diagram illustrating the structure of a support structure of a dichroic mirror 18 according to the second embodiment. In the figure, reference numerals 81L and 81R are first holding surfaces of the two divided portions of the a housing 80, and reference numerals 71L and 71R are first pressing portions which press the dichroic mirror 18 from a back surface 185 side toward the first holding surfaces 81L and 81R, respectively.

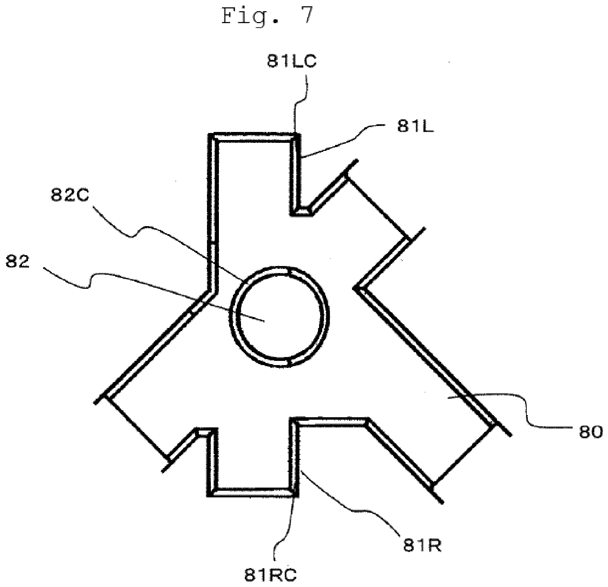

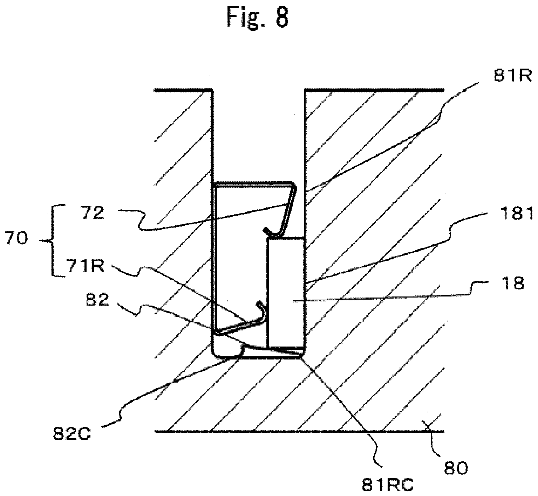

In addition to the configuration having the two features described in the first embodiment, the second embodiment further has a configuration having two features. First, the first feature will be described with reference to Figs. 7 and 8. Fig. 7 is a partial plan diagram illustrating a positional relationship of the holding surfaces of the housing 80 according to the second embodiment, and Fig. 8 is a partial cross-sectional diagram illustrating a positional relationship of the dichroic mirror 18 and corner portions of the holding surfaces according to the second embodiment in a cross section taken along line B-B' of Fig. 6. The first feature of the second embodiment is that the first holding surfaces of the housing 80 is configured with 81L and 81R which are formed by dividing into two holding surfaces in the same plane, and the second holding surface 82 is formed between the two divided holding surfaces 81L and 81R. In this case, even if rounded portions are provided to the corner portions 81LC, 81RC, and 82C of the first holding surfaces 81L and 81R and the second holding surface 82 so as to avoid damage to the housing 80 and the mold at the time of molding, as illustrated in Fig. 8, since the corner portions 81LC, 81RC, and 82C are not in contact with the dichroic mirror 18, the accuracy of the mounting posture of the dichroic mirror 18 is not impaired.

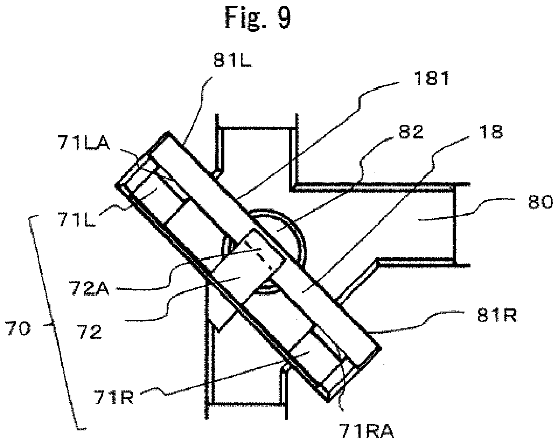

Next, the second feature will be described with reference to Fig. 9. Fig. 9 is a partial plan diagram illustrating the pressing position of the dichroic mirror 18 of the second embodiment. A pressing member 70 is configured to include three pressing portions of first pressing portions 71L and 71R and a second pressing portion 72 which face the first holding surfaces 81L and 81R and the second holding surface 82, respectively. The first pressing positions 71LA and 71RA and the second pressing position 72A exerting a pressing force on the dichroic mirror 18 are allowed to face the first holding surfaces 81L and 81R and the second holding surface 82, respectively. In addition, in the embodiment, all of the first pressing portions 71L and 71R and the second pressing portion 72 are integrally formed on one pressing member 70, but all or some of the pressing portions may be separately provided on different pressing members. Due to the second configuration, there is no unbalance of the rotational moment in the longitudinal direction of the dichroic mirror 18, and irrespective of an error in outer dimensions of the dichroic mirror 18, it is possible to mount the dichroic mirror 18 to the housing 80 in the state where the reflecting surface 181 is in surface contact with both of the first holding surfaces 81L and 81R.

Therefore, in the second embodiment in which moldability of the housing is improved, it is possible to provide a support structure for an optical element in which a variation in mounting posture is suppressed irrespective of an error in outer dimensions of the optical element. Furthermore, in the image drawing apparatus to which the invention is applied, since the optical axes of the laser beams of three colors can be aligned to be substantially the same, it is possible to display an image with less color irregularity.

### REFERENCE SIGNS LIST

1: image drawing apparatus
10: laser light source unit
20: deflecting mirror device
30: screen
40, 80: housing
50, 70: pressing member
11, 12, 13: laser light source
14, 15, 16: collimator lens
17, 18: dichroic mirror
181: reflecting surface
182: ridge line separated from reflecting surface
183: ridge line on second pressing portion side of reflecting surface
184: ridge line on second holding surface side of reflecting surface
185: back surface opposing to reflecting surface
186: second surface adjacent to reflecting surface and facing second pressing portion
61: center line parallel to normal line of reflecting surface of dichroic mirror
62: center line on the central plane between reflecting surface and back surface of dichroic mirror
41, 81L, 81R: first holding surface
42, 82: second holding surface
42C, 82C, 81LC, 81RC: corner portion
51, 51L, 51R first pressing portion
52, 72: second pressing portion
51A, 71LA, 71RA: first pressing position
52A, 72A: second pressing position
θ: intersection angle of extrapolation surfaces when first holding surface and second holding surface are extrapolated and extended
φ: angle between reflecting surface and side surface near second holding surface adjacent to reflecting surface

## Claims

1. A support for an optical element,
wherein a housing is provided,
wherein a first holding surface contact-holding a first surface which is a predetermined surface of the optical element and a second holding surface contact-holding at least a portion of a ridge line of the second surface adjacent to the first surface of the optical element are formed in a portion of the housing, and the ridge line is separated from the first surface,
wherein a first pressing member which presses the optical element toward the first holding surface and a second pressing member which presses the optical element toward the second holding surface are provided, and
wherein an intersection angle between extensions of the first holding surface and the second holding surface is smaller than an angle between the first surface and the second surface.

2. The support for the optical element according to claim 1, wherein the intersection angle is an acute angle.

3. The support for the optical element according to claim 2, wherein the first pressing position at which the first pressing member exerts a pressing force on the optical element is closer to the second holding surface than to a center of the optical element, and the second pressing position at which the second pressing member exerts a pressing force on the optical element is a position farther separated from the first holding surface than from the center of the optical element.

4. The support for the optical element according to claim 3, wherein the first holding surface is configured with at least two or more divided holding surfaces in the same plane, and the second holding surface is formed between the divided first holding surfaces.

5. The support for the optical element according to claim 4,
wherein the pressing position at which the first pressing member exerts a pressing force on the optical element is a position facing the first holding surface, and
wherein the support is configured with two or more pressing members facing the respective surfaces.

6. An image drawing apparatus having a housing, a light source, and an optical element which gives an optical action to a beam from the light source and drawing an image on a screen through the optical element,
wherein a first holding surface contact-holding a first surface which is a predetermined surface of the optical element and a second holding surface contact-holding at least a portion of a ridge line of the second surface adjacent to the first surface of the optical element are formed in a portion of the housing, and the ridge line is separated from the first surface,
wherein a first pressing member which presses the optical element toward the first holding surface and a second pressing member which presses the optical element toward the second holding surface are provided, and
wherein an intersection angle between extensions of the first holding surface and the second holding surface is smaller than an angle between the first surface and the second surface.

7. The image drawing apparatus according to claim 1, wherein the intersection angle is an acute angle.

8. The image drawing apparatus according to claim 7, wherein the first pressing position at which the first pressing member exerts a pressing force on the optical element is closer to the second holding surface than to a center of the optical element, and the second pressing position at which the second pressing member exerts a pressing force on the optical element is a position farther separated from the first holding surface than from the center of the optical element.

9. The image drawing apparatus according to claim 8, wherein the first holding surface is configured with at least two or more divided holding surfaces in the same plane, and the second holding surface is formed between the divided first holding surfaces.

10. The image drawing apparatus according to claim 9,
wherein the pressing position at which the first pressing member exerts a pressing force on the optical element is a position facing the first holding surface, and
wherein the support is configured with two or more pressing members facing the respective surfaces.
